Europäisches Patentamt

European Patent Office

Office européen des brevets

(11) Publication number: **0 301 867**
**A2**

## (12) EUROPEAN PATENT APPLICATION

(21) Application number: **88306974.2**

(22) Date of filing: **28.07.88**

(51) Int. Cl.⁴: **C 09 J 3/14**
**C 08 L 51/06, C 08 L 23/20,**
**C 08 L 23/04**

(30) Priority: **31.07.87 US 80045   31.08.87 US 91484**

(43) Date of publication of application:
**01.02.89   Bulletin   89/05**

(84) Designated Contracting States:
**AT BE CH DE ES FR GB GR IT LI LU NL SE**

(71) Applicant: **SHELL OIL COMPANY**
**900, Louisiana**
**Houston Texas 77001  (US)**

**MITSUI PETROCHEMICAL INDUSTRIES, LTD.**
**2-5, Kasumigaseki 3-chome Chiyoda-ku**
**Tokyo 100  (JP)**

(72) Inventor: **Hwo, Charles C.**
**2710 Sugarwood Drive**
**Sugarland Texas 77478  (US)**

**Mostert, Simone**
**13023 King Circle**
**Cypress Texas 77429  (US)**

(74) Representative: **Myerscough, Philip Boyd et al**
**J.A.Kemp & Co. 14, South Square Gray's Inn**
**London, WC1R 5EU  (GB)**

(54) Hot melt adhesives.

(57) A hot melt adhesive comprising an optionally modified polymer, an optionally modified butene-1 polymer, a stabilizer and optionally one or more of a tackifying resin, a wax and an atactic propylene polymer.

EP 0 301 867 A2

Bundesdruckerei Berlin

## Description

## "HOT MELT ADHESIVES"

This invention relates to a hot melt adhesive capable of forming a peelable adhesive bond and which comprises, as essential components, an optionally modified butene-1 polymer and an optionally modified ethylene polymer. The invention also relates to a laminar structure formed using the hot melt adhesive.

Hot melt adhesives can be formulated to be pressure sensitive but these adhesives are usually soft, tacky and have limited strength and adhesion. Conventional hot melts such as formulations of ethylene-vinyl acetate copolymer (EVA), polyethylenes (PE), polyamides, or polyesters are rigid, and form good strong bonds to certain substrates and are generally incapable of being peelable.

Solvent applied contact adhesives provide good bond strengths but they require the use of solvents which can be toxic, pollutant or fire hazards. Further, few of these adhesives are capable of "peelability" as the term is later defined.

The hot melt adhesive of the present invention requires no solvents, and has peelability and is capable of bonding to a variety of substrates.

A "peelable seal or bond" or a seal or bond having "peelability" is a seal or bond, as between two films or other substrates, produced by heat sealing, impulse sealing or application as a hot melt between two surfaces which can be opened in the original plane, joining the two films or other substrates, by the action of a pulling force, without the opening of the seal or bond causing wrenching off or tearing in the films or other substrate(s). For the purposes of the present invention, the peelable seal or bond must possess a mechanical resistance to opening or "peeling" which is sufficient to maintain a tight seal around a packaged item, such as a quantity of liquid or solid, during storage and transport until a user wants access to the packaged item. The mechanical resistance of the peelable seal or bond must be low enough to permit ready manual opening, i.e. without the use of an auxiliary instrument to break the seal or bond.

The term "peelability" in this application refers to the sealed area of the adhesive where the adhesive is joined to a substrate. The adhesive peelability is measured by the degree of strength applied. Hot melt adhesive peelability can be measured by ASTM method D-1876, (T-Peel) for 180° peelability or by ASTM testing method D-903 for 180° peelability.

The invention relates to blends usable as hot melt adhesives in a packaging application and to laminates prepared with these hot melt adhesives and which are characterized by a nearly constant peel strength over an extended heat seal or application temperature. The present invention permits the manufacture of a more consistent finished product, in particular a sealed package having a seal of predictable and constant peel strength, in spite of inevitable variations in the heat seal temperatures or application temperature used in the production of such packages.

Many thermoplastics materials have been employed in the manufacture of films capable of forming peelable seals. Thus, US-A-4,189,519 discloses a blend for producing a peelable heat seal comprising (1) about 50 to 90 percent by weight of a copolymer of about 80 to 96 percent by weight ethylene and about 20 to 4 percent by weight of an ethylenically unsaturated ester, and (2) about 10 to 50 percent by weight of a crystalline isotactic polybutylene. While capable of forming a peel seal, this blend comprises polybutylene as a minor component and, although it bonds to high density polyethylene (HDPE) without the use of adhesive, it will not bond to polypropylene without an adhesive.

US-A-3,900,534 discloses thermoplastic shrink films with good heat seal characteristics and good optical properties, but does not address the need for a peel seal film.

US-A-3,879,492 discloses blends consisting of polybutylene, styrene-butadiene copolymer, low density polyethylene, high density polyethylene, and polyisobutylene.

US-A-4,539,263 discloses peel seals based on propylene/α-olefin copolymer, but does not disclose the use of butylene polymers.

US-A-4,665,130 and US-A-4,666,778 disclose blends of polybutylene and EVA (or polyethylene) and polypropylene with the polypropylene being less than 15 weight percent in the blend.

US-A-3,573,240 describes hot melt adhesive compositions for hard cover book binding. Column 4, lines 1 to 7, teaches that minor amounts, i.e. up to 5% by weight, of alpha olefin comonomers such as ethylene and propylene may be present in a butene-1 polymerization system without any substantial loss of the desirable properties displayed by the resultant, essentially homopolymeric system and also states (column 2, lines 61 to 63) that the book binding hot melt adhesives display good heat stability and rapid setting speeds. This document does not disclose a peelable hot melt adhesive, even though up to about 5% by weight of ethylene may be added to a substantially butene-1 polymerization system.

US-A-4554304 describes hot melt adhesives with long open time (the time for which an adhesive remains capable of auto-adhesion) and good bonding to cold metals made of blends of a maleic anhydride modified copolymer of butene-1 and ethylene, an aliphatic, substantially non-polar resin, an antioxidizing agent and, optionally, microcrystalline wax, a block copolymer and atactic polypropylene. This patent discloses a variety of modified butene-1 polymers useful within the scope of the present invention.

The present invention recognises that conventional multilayer peel seal films or sheets are comprised of substrates and peelable sealings wherein the sealants are not adhesives of the hot melt type. The present invention provides a novel hot melt adhesive blend which can provide a peelable system which avoids delamination between sealed layers when the sealed layers are pulled apart. In some embodiments, a tackifying resin is added to held bind together incompatible substrates.

It should be noted that the present invention has been developed to provide a blend of two generally non-compatible polymers to form a bond with a controllable cohesive strength. "Noncompatible polymers" are defined as polymers which, when blended or mixed, separate into two separate phases. "Controllable cohesive strength" refers to an adhesive wherein the cohesive strength can be varied or controlled by changing the ratio of noncompatible components.

According to the invention there is provided a hot melt adhesive comprising from 50 to 95 percent by weight of a first component and from 50 to 5 percent by weight of a second component, the weight percentages being based upon the total weight of the first and second components and one of the first component and the second component being an optionally modified ethylenic polymer and the other of said components being an optionally modified butene-1 polymer, at most one of said components being a modified polymer, and up to 2 parts by weight (phr) a stabilizer per hundred parts of said components. Preferably the hot melt adhesive comprises from 60 to 80 percent by weight of the first components, from 40 to 20 percent by weight of the second component, and up to 1 phr of stabilizer.

A quantity of a tackifying resin can be added, the amount of which is varied depending on the other components used in the adhesive. Also, up to 30 phr of a wax, and/or up to 15 phr of an atactic propylene homopolymer or copolymer can be added to the novel formulation.

In the present invention, a laminar structure can be made using a hot melt adhesive to form peelable structures or closures. Substrates of, for example, nylon, polycarbonate, stainless steel and other similar materials, as well as non-compatible substrates can be used.

The optionally modified butene-1 polymers used as one essential component of the hot melt adhesives of the invention are a unique group of olefinic polymers because of their slow crystallization rates. The very slow crystallization rate of optionally modified butene-1 polymers, in contrast to the crystallization rates of other polyolefin crystalline polymers such as EVA, polyethylene and polypropylene, have been found to be beneficial in formulating hot melt adhesives which have good adhesion to a variety of substrates (metals such as stainless steel and anodized aluminum, for example).

Optionally modified butene-1 polymers useful with the present invention are primarily linear chain molecules with regular and spatially ordered arrangements of ethyl side groups; the pendant groups that result when butene-1 is polymerized across the 1,2- double bond to form an ethylene chain backbone. When cooled from a melt, the ethyl side groups initially align in a tetragonal spatial arrangement, developing a little over one half of the ultimate crystallinity (form II) of the polymer. With time, the tetragonal crystalline phase form II transforms into a stable hexagonal spatial arrangement with subsequent development of additional crystallinity (form I).

Unmodified butene-1 homopolymers and copolymers are usable within the scope of the present invention only when used in conjunction with a modified ethylene hompolymer or copolymer component. Unmodified butene-1 homopolymers are disclosed in US-A-3,362,940 as are copolymers of butene-1 with one or more comonomer, such as an alpha-olefin, for example ethylene, propylene or an alpha-olefin of 5 to 8 carbon atoms. The copolymer can contain from 1 to 30 mole % of such a comonomer. Butene-1/ethylene copolymers, with ethylene comonomer content in the range of 11 to 20 mole percent, especially about 11 mole %, are particularly useful in the hot melt adhesive as the ethylene comonomer produces a lower glass transition temperature (Tg) amorphous phase, further reduces the crystallization rate of the adhesive and further reduces the ultimate level of crystallinity in the polymer. The hot melt adhesive can be formulated with a variety of other components, such as tackifying resins, waxes, oils, stabilizers, and other additives, such as atactic polypropylene homopolymer or copolymer.

The modified butene-1 polymers which can be used in accordance with the present invention are modified versions of the unmodified polymers referred to in the preceding paragraph. The modified polymers are preferably derived from the unmodified polymers by reaction with maleic anhydride. Preferably the modified butene-1 polymer contains 0.05 to 5% by weight of grafted maleic anhydride units.

The optionally modified butene-1 polymers usable within the scope of the present invention, can be selected from polymers having a wide range of melt flows, from fractional to 1000 dg/min based on ASTM D1238 condition E at 190°C.

The other essential component of the hot melt adhesives of the invention is an optionally modified ethylene polymer. Polymers having melt flows that range from fractional to 100 dg/min based on ASTM test D1238, condition E at 190°C are particularly useful.

The ethylenic polymer may be a modified or unmodified linear low density polyethylene (LLDPE), a modified or unmodified low density polyethylene (LDPE), a modified or unmodified medium density polyethylene (MDPE), a modified or unmodified ethylene/vinyl acetate copolymer (EVA), a modified or unmodified ethylene/methyl acrylate copolymer (EMA), a modified or unmodified high density polyethylene (HDPE) or a modified or unmodified ethylene/acrylic acid copolymer. Most preferably, low density polyethylene or ethylene/vinyl acetate copolymers in either the modified or unmodified form, depending on which butene-1 component is selected, are particularly usable within the scope of the invention.

Modified ethylene polymers which are usable in accordance with the invention are available from USI Chemicals, as "PLEXAR" (Registered Trade Mark) 1, 2, 3, 5, 100, 101, 102, 103, 104, 105 and 130.

A modified ethylene polymer component should only be used with an unmodified butene-1 polymer component, and an unmodified ethylene polymer component should only be used with a modified butene-1

3

polymer component.

Stabilizers usable within the scope of the present invention include hindered phenols, such as Irganox 1010 made by Ciba Geigy Corporation or Ethanox 330 made by Ethyl Corporation, or phosphorus-based stabilizers, such as Irgafos 168 made by Ciba Geigy Corp. Irganox 1010 (usually referred to as tetrakis [methylene (3,5-di-tert-butyl-4-hydroxyhydrocinnamate)] methane) is the most preferred stabilizer for use in this invention. Ethanox 330 is a 1,3,5,-trimethyl-2,4,6-tris [3,5-di-tert-butyl-4-hydroxy-benzyl] benzene. The quantity of stabilizer usable within the scope of the present invention is expressed in parts per hundred (phr) based on the total amount of the components in the hot melt adhesive which are expressed in weight percent. It is preferred to use up to 1 phr, especially about 0.3 phr, of a stabilizer, although 0.1 to 2 phr is also usable within the scope of the invention.

Tackifying resins usable within the scope of the present invention can be either compatible with the optionally modified ethylene polymer component or compatible with the optionally modified butene-1 polymer component and generally not with both components. It is necessary that the tackifying resin be compatible with a modified component of the blend.

If a tackifying resin compatible with the optionally modified ethylene polymer is used, it can be a polar tackifier resin. Suitable such tackifying resins include rosin esters and aliphatic hydrocarbon resins. Examples of resins compatible with the optionally modified ethylene polymer include Zonester 85 (Glycerol esters of disproportionated tall oil rosin) and Zonester 100 made by Arizona Chemical Company or Kristalex 3070 (an alpha methyl styrene based resin) made by Hercules Corporation.

If a tackifying resin is used which is compatible with the optionally modified butene-1 polymer component, it is preferred that the tackifying resin be non-polar, such as Regalrez 1078 (a hydrogenated hydrocarbon resin) made by Hercules, Escorez 1304 (also a hydrocarbon resin) available from Exxon Chemical Company, Wingtack 95 (a synthetic polyterpene resin), or Wingtack 85, all available from Goodyear Tire and Rubber. Suitable resins include partially hydrogenated $C_9$ based hydrocarbon resins with softening points of 70°C to 125°C, as well as $C_5$ stream resins, and polyterpenes, suitable in amounts of from 20 to 60% by weight and preferably 50% by weight.

The waxes which can be included in the adhesives of the present invention can be microcrystalline waxes, though other waxes may be used. The waxes may be used in amounts up to 30 phr (parts per hundred) based on the overall adhesive composition. Shellwax (Registered Trade Mark) 100, 300 and 500 are examples of waxes preferred for use within the scope of the present invention. An amount of the wax of 10 to 30 phr, and preferably 20 phr, can provide the advantage of lowering viscosity in the adhesive composition without substantially decreasing the service temperature of the adhesive.

Atactic polypropylene (such as AFAX 510 made by Hercules Inc. of Wilmington, Delaware, U.S.A.) may be added to the adhesive composition in amount up to 15 phr of the overall adhesive formulation. Most preferably, 15 phr of Afax 510 is contemplated to provide the most advantageous benefits such as: (1) improved processability of the overall adhesive formula by acting as a diluent, and (2) reduced cost of the resulting adhesive.

The quantity of atactic polypropylene is expressed in phr of the components of the hot melt adhesive in the same manner as used for expressing the quantity of stabilizer.

Plasticizers, such as oils, like Shellflex (Registered Trade Mark) 371, can also be added to the composition to reduce the cost of production in making the final peelable product. These plasticizers may also enhance processability of the adhesive.

The present invention includes a laminated structure wherein adhesive is used between substrates in a continuous or non-continuous manner. If the adhesive is to be applied in a continuous manner, the substrate should be compatible with the major component of the adhesive. If the adhesive is to be non-continuously applied, the substrate can be either compatible or non-compatible with the major component.

The laminated structure could contain one of the following as a substrate: nylon, polyester, polyvinyl chloride (PVC), high density polyethylene (HDPE), polypropylene (PP), polycarbonate (PC), polystyrene (PS), polyacrylonitrile (PAN), paper or aluminum foil or poly-4-methyl pentene. It is not intended that the substrate of the laminated structure be limited to only the above named compounds, and other suitable substrate can be used.

For modified butene-1 polymer rich adhesives, a compatible substrate includes foil, polypropylene, treated steel, aluminum, and paper. Substrates compatible with an adhesive having a major amount of modified ethylene polymer include paper, polyester and high density polythylene.

Substrates which are non-compatible with adhesives having as the major component modified butene-1 polymer include polycarbonate, polyacrylonitrile copolymer, poly-4-methyl pentene, nylon, polyvinyl chloride and high density polyethylene.

Substrates which are non-compatible with adhesives having as the major component modified ethylene polymer include polycarbonate, polyacrylonitrile, poly-4-methyl pentene and polypropylene.

The addition of a tackifying resin will most likely alter the adhesive effect between the substrate and the adhesive.

A laminated structure can be made by coating the hot melt adhesive on at least one side of a substrate. A sandwich style laminate is also contemplated within the scope of the invention.

It has now been discovered that a hot melt adhesive may be made with weight ratios (a):(b) that range from 70:30 to 30:70 by weight of either (a)(1) optionally modified ethylene polymer or (2) optionally modified

4

butene-1 polymer to (b) tackifying resin. These percentages may be altered to be within the more preferred ratio of 60:40 to 40:60, while the most preferred ratio is 50:50.

If the adhesive composition comprises additional components of tackifying resin and atactic polypropylene, wax and/or another stabilizer, and the composition consists of a minor amount of optionally modified butene-1 polymer and a major amount of the optionally modified ethylene component then the composition can comprise formulations such as the following:

(I) a formulation of from 66.6 to 15 weight percent of optionally modified ethylene polymer, from 5 to 50 weight percent of butene-1 polymer, up to 1 phr of a stabilizer, from 15 to 66.5 weight percent of a tackifying resin compatible with the ethylene polymer component, up to 30 phr of a wax, and/or up to 15 phr of atactic polypropylene, wherein the weight ratio of tackifying resin to optionally modified ethylene polymer is from 30:70 to 70:30.

(II) a formulation consisting of from 57 to 20 percent by weight of an optionally modified ethylenic polymer, from 5 to 50 percent by weight of an optionally modified butene-1 polymer, up to 1 phr of a stabilizer, from 57 to 20 percent by weight of a tackifying resin compatible with the ethylene polymer component, up to 30 phr of a wax and/or up to 15 phr of atactic polypropylene, wherein the weight ratio of tackifying resin to optionally modified ethylene polymer is from 40:60 to 60:40.

(III) a formulation which comprises from 47.5 to 25 percent by weight of an optionally modified ethylenic polymer, from 5 to 50 percent by weight of an optionally modified butene-1 polymer, up to 1 phr of a stabilizer, and from 25 to 47.5 percent by weight of a tackifying resin compatible with the ethylene polymer component, up to 30 phr of a wax, and/or up to 15 phr of atactic polypropylene, wherein the weight ratio of tackifying resin to optionally modified ethylene polymer is about 1:1.

If the adhesive composition comprises wax and additional components, such as tackifying resin, atactic polypropylene, and/or another stabilizer, and the composition consists of a minor amount of an optionally modified ethylene polymer component, and a major amount of an optionally modified butene-1 polymer component, then the composition can comprise the formulations such as the following:

(IV) a formulation consisting of from 5 to 50 percent by weight of an optionally modified ethylenic polymer, from 66.5 to 15 percent by weight of an optionally modified butene-1 polymer, up to 1 phr of a stabilizer, and from 15 to 66.5 percent by weight of a tackifying resin compatible with the butene-1 polymer component, up to 30 phr of a wax, and/or up to 15 phr of atactic polypropylene, wherein the weight ratio of tackifying resin to butene-1 polymer component is from 30:70 to 70:30.

(V) a formulation consisting of from 5 to 50 percent by weight of an optionally modified ethylenic polymer, from 57 to 20 percent by weight of an optionally modified butene-1 polymer, up to 1 phr of a stabilizer and from 20 to 57 percent by weight of a tackifying resin compatible with the butene-1 polymer component, up to 30 phr of a wax, and/or up to 15 phr of atactic polypropylene resin, wherein the weight ratio of tackifying resin to butene-1 polymer component is from 40:60 to 60;40 of resin to modified butene-1 homopolymer or copolymer.

(VI) a formulation that comprises from 5 to 50 percent by weight of an optionally modified ethylenic polymer, from 47.5 to 25 percent by weight of an optionally modified butene-1 polymer, up to 1 phr of a stabilizer, and from 25 to 47.5 percent by weight of a tackifying resin compatible with the butene-1 polymer component, up to 30 phr of a wax and/or up to 15 phr of atactic polypropylene, wherein the weight ratio of tackifying resin to butene-1 polymer component is about 1:1.

## EXAMPLE 1

### Adhesive Preparation

Modified butene-1 polymers or modified ethyl/vinyl acetate copolymers can be prepared by functionalizing them with maleic anhydride. The modified butene-1 polymers may be prepared by first mixing polybutylene pellets with a peroxide (Lupersol 101) at 2000-10000 ppm and then with the appropriate amount of maleic anhydride. The initial mixture should be passed through a heated extruder. The temperature of the extruder should be chosen so as to melt the polybutylene and to cause substantially complete decomposition of the peroxide, for example heat at 200°C and using an rpm to obtain about a 2 minute residence time. Typically 1000-4000 ppm of a peroxide (Lupersol 101) can be used with 0.1% wt to 5% wt maleic anhydride when functionalising the butene-1 polymer.

Adhesives may be prepared using either a small Brabender compound head (approximately 50 cc capacity) or a one U.S. quart (0.95 dm$^3$) sigma blade mixer. The test formulations can be blended using preheated equipment (preheated to 170°-180°C) by introducing the butene-1 polymer, and mixing, until a soft, homogeneous mass is formed, and then gradually introducing the remaining ingredients. Batch times can be about 20 minutes.

## EXAMPLE II

### Adhesive Film

Thin adhesive films (125 to 200 μm) can be prepared by casting onto release coated polyester film (onto release coated side) using a pair of heated nip rolls that are adjusted to produce the desired gap (hence the defined adhesive thickness). Preheated adhesive (at about 130°C) can be poured onto a polyester film and hand drawn through the heated nip rolls. Alternatively, the adhesive can be poured onto the substrate and a "doctor blade" can be "drawn down" the adhesive to achieve a uniform coating on the substrate. Other methods of applying hot melt adhesive can also be used. For continuous or non-continuous application, techniques such as spraying the adhesive, using hot melt guns to apply adhesive or extruding the adhesive can be used. Using the first described technique, adhesive films, 10 cm (4 inches) wide and 20 cm (8 inches) long, can be produced with a small quantity (<60 gms) of adhesive, so that very small quantities of adhesive can be evaluated.

Once cooled and allowed to set, these adhesives can be used to prepare test specimens. For example, Kraft paper to Kraft paper, polypropylene to polypropylene and polyethylene to polyethylene bonds can be made by cutting adhesive squares from the polyester film, peeling them off, placing the adhesive between the paper and heat sealing with a hot bar sealer (time, pressure and temperature can be adjusted). Alternatively, the adhesive square or an adhesive strip may be placed on a piece of plastic or metal substrate, melted with a heat gun (or in an oven), and then joined under moderate contact pressure to form T-peel, lap shear or Shear Adhesion Failure Temperature (SAFT) bonded substrate specimens.

## TESTING METHODS

1. Adhesive Hot Melt Viscosity--Viscosities can be measured at 177°C in a Brookfield Thermocell Viscometer with an RVT head and Number 29 spindle (ASTM D3236); for low viscosity formulations, a number 27 spindle can be used.

2. Peel Strength--a 25 mm x 150 mm laminate sandwich can be formed with the substrate of interest, the adhesive as the interlayer between the substrate surfaces. The laminate surfaces can be placed in an Instron tester, one surface in the lower jaw. The jaws can be separated at a rate of 25 cm/min. Force required to peel the surfaces can be recorded continuously. The maximum and minimum values should be noted, as well as failure mode, i.e., adhesive, cohesive, or a combination. This test should approximate a peel angle of about 180°C.

Table 1 summarises results obtained when employing butene-1 polymers and ethylene polymers which are both unmodified, while Table 2 summarises the results obtained when either both polymer components are unmodified or when one of them is modified. (In the Tables the amounts are percentages by weight unless indicated otherwise.)

TABLE 1

| FORMULATION | A | B | C | D | E | F | G |
|---|---|---|---|---|---|---|---|
| Butene-1 polymer(1) | 37.5 | 37.5 | 33.3 | - | - | - | - |
| Butene-1 polymer(2) | - | - | - | 12.5 | 15 | 33.3 | 33.3 |
| Ethylene polymer (3) | 12.5 | 12.5 | 33.3 | 37.5 | 85 | 33.3 | 33.3 |
| Tackifying Resin(4) | 50.0 | 50 | 33.3 | - | - | - | - |
| Tackifying Resin(5) | - | - | - | 50.0 | - | 33.3 | 33.3 |
| Wax(6) | - | - | 25 phr | - | - | 25 phr | 25 phr |
| Stabilizer(7) | 0.3 phr | 0.3 phr | 0.3 phr | 0.3 phr | 0.3phr | 0.3 phr | 0.3 phr |
| Substrate | PP* | Al** | Al** | HDPE*** | Paper | Paper | HDPE*** |

TESTS

| | A | B | C | D | E | F | G |
|---|---|---|---|---|---|---|---|
| Peel Strength, kg/m (pli)(8) | 66(3.7) | 73(4.1) | 20(1.1) | 46(2.6) | 23(1.3) | 18(1.0) | 18(1.0) |

(1) Copolymer of ethylene and butene-1 known as Duraflex ® Polybutylene 8910 available from Shell Chemical Company.
(2) Developmental homopolymer, Polybutylene 0800 available from Shell Chemical Company.
(3) Ethylene vinyl acetate (EVA) Ultrathene ® 649-04 available from U.S. Industrial Co.
(4) Regalrez 1078.
(5) Zonester 85.
(6) Shellwax 100.
(7) Irganox 1010, a hindered phenol.
(8) "pli" is pounds per linear inch.

*PP is polypropylene
**Al is aluminum
***HDPE is high density polyethylene

TABLE 2

| Formulation | 1 | 2 | 3 | 4 | 5 | 6 | 7 | 8 | 9 | 10 | 11 | 12 |
|---|---|---|---|---|---|---|---|---|---|---|---|---|
| Butene-1 polymer[1] | 85 | - | 15 | 15 | 55 | - | 15 | 15 | 50 | - | 15 | 15 |
| Modified butene-1 polymer[2] | - | 85 | - | - | - | 55 | - | - | - | 50 | - | |
| Ethylene polymer[3] | 15 | 15 | 85 | - | 15 | 15 | 55 | - | 15 | 15 | 50 | - |
| Modified Ethylene polymer[4] | - | - | - | 85 | - | - | - | 55 | - | - | - | 50 |
| Tackifying Resin[5] | - | - | - | - | 30 | 30 | - | - | 25 | 25 | - | - |
| Tackifying Resin[6] | - | - | - | - | - | - | 30 | 30 | - | - | 25 | 25 |
| Wax[7] | - | - | - | - | - | - | - | - | 10 | 10 | 10 | 10 |
| Stabilizer[8] | 0.3 phr | 0.3 phr | 0.3 phr | 0.3 phr | 0.3 phr | 0.3 phr | 0.3 phr | 0.3 phr | 0.3 phr | 0.3 phr | 0.3 phr | 0.3 phr |
| TESTS | | | | | | | | | | | | |
| Adhesion to substrates | | | | | | | | | | | | |
| Aluminum Foil | N | Y | N | Y | N | Y | N | Y | N | Y | N | Y |
| Nylon | N | Y | N | Y | N | Y | N | Y | N | Y | N | Y |

---

[1] Copolymer of butene-1 and ethylene known as Duraflex[R] Polybutylene 8910 available from Shell Chemical Company.

[2] Polybutylene 8910 grafted with 1.0% wt maleic anhydride.

[3] Ethylene vinyl acetate (EVA) Ultrathene[R] 649-04 available from U.S. Industrial Co.

[4] EVA (649-04) grafted with 1.0% wt maleic anhydride.

[5] Zonester 85.

[6] Shellwax 400.

[7] Irganox 1010, a hindered phenol.

[8] N = no bond; Y = yes, there is bond.

**Claims**

1. A hot melt adhesive comprising from 50 to 95 percent by weight of a first component and from 50 to 5 percent by weight of a second component, the weight percentages being based upon the total weight of the first and second components and one of the first component and the second component being an optionally modified ethylenic polymer and the other of said components being an optionally modified butene-1 polymer, at most one of said components being a modified polymer, and up to 2 parts by weight (phr) of a stabilizer per hundred parts of said components.

2. A hot melt adhesive according to claim 1 comprising from 60 to 80 percent by weight of the first component, from 40 to 20 percent by weight of the second component, and up to 1 phr of stabilizer.

3. A hot melt adhesive according to claim 1 or 2 which also comprises a tackifying resin.

4. A hot melt adhesive according to claim 3 which comprises from 66.5 to 15 percent by weight of said first component, from 5 to 50 percent by weight of said second component, up to 1 phr of a stabilizer, and from 15 to 66.5 percent by weight of the tackifying resin, wherein the weight ratio of tackifying resin to the first component is from 30:70 to 70:30 and the weight percentages are based on the total weight of the adhesive.

5. A hot melt adhesive according to claim 4 which comprises from 57 to 20 percent by weight of the first component, from 5 to 50 percent by weight of the second component, up to 1 phr of a stabilizer, and from 20 to 57 percent by weight of the tackifying resin, wherein the weight ratio of tackifying resin to the first component is from 40:60 to 60:40.

6. A hot melt adhesive according to claim 4 which comprises from 47.5 to 25 percent by weight of the first component, from 5 to 50 percent by weight of the second component, up to 1 phr of a stabilizer, and from 25 to 47.5 percent by weight of the tackifying resin, wherein the weight ratio of tackifying resin to first component is about 1:1.

7. A hot melt adhesive according to any one of the preceding claims which also comprises up to 30 phr of a wax.

8. A hot melt adhesive according to claim 7 wherein the wax is a microcrystalline wax.

9. A hot melt adhesive according to any one of the preceding claims wherein said optionally modified ethylenic polymer is selected from linear low density polyethylene, low density polyethylene, medium density polyethylene, ethylene/vinyl acetate copolymer, ethylene/methyl acrylate copolymer, high density polyethylene and ethylene/acrylic acid copolymer.

10. A hot melt adhesive according to any one of the preceding claims wherein a modified ethylenic polymer, if present, has been modified by reaction with maleic anhydride.

11. A hot melt adhesive accoding to claim 10 wherein the modified ethylenic copolymer contains 0.05 to 5% by weight of grafted maleic anhydride units.

12. A hot melt adhesive according to any one of the preceding claims wherein said optionally modified butene-1 polymer is a homopolymer or a copolymer of butene-1 with, as comonomer, at least one of ethylene, propylene and an alpha olefin having 5 to 8 carbon atoms.

13. A hot melt adhesive according to claim 12 wherein the butene-1 copolymer contains 1 to 30 mole percent of comonomer.

14. A hot melt adhesive according to any one of the preceding claims wherein a modified butene-1 polymer, if present, has been modified by reaction with maleic anhydride.

15. A hot melt adhesive according to claim 14 wherein the modified butene-1 polymer contains 0.05 to 5% by weight of grafted maleic anhydride units.

16. A hot melt adhesive according to any one of the preceding claims wherein the stabilizer is a hindered phenol.

17. A hot melt adhesive according to claim 16 wherein said hindered phenol is tetrakis[methylene (3,5 di-tert-butyl-4-hydroxyhydrocinnamate)] methane.

18. A hot melt adhesive according to any one of the preceding claims which also comprises up to 15 phr of atactic polypropylene.

19. A hot melt adhesive according to any one of claims 3 to 18 wherein the first component is an optionally modified ethylenic polymer and the tackifying resin is an aliphatic hydrocarbon ester of disproportionated tall oil rosin or alpha methyl styrene based resin.

20. A hot melt adhesive according to any one of claims 3 to 18 wherein the first component is an optionally modified butene-1 polymer and the tackifying resin is a non-polar resin, partially hydrogenated hydrocarbon resin, synthetic polyterpene or $C_5$ stream resin.

21. A laminar structure comprising a substrate having a coating layer of a hot melt adhesive as claimed in any one of the preceding claims.

22. A laminar structure according to claim 21 wherein the substrate is a nylon, polyester, poly(vinyl chloride), high density polyethylene, polypropylene, paper, aluminium foil, polystyrene, polyacrylonitrile, polycarbonate or poly-4-methylpentene.

23. Use of a hot melt adhesive as claimed in any one of claims 1 to 20 in the preparation of peelable adhesive bonds.